# EUROPEAN PATENT APPLICATION

(11) **EP 4 437 884 A1**
(43) Date of publication of application: **02.10.2024**
(21) Application number: 22899112.1
(22) Date of filing: 25.11.2022
(51) Int. Cl.: A24F 40/46, A24F 40/10, H05B 3/14, A24F 40/53, A24F 40/42, A24F 40/70, B29C 45/14, A24F 40/485

(54) **POROUS CERAMIC HEATER, AND LIQUID CARTRIDGE COMPRISING SAME**

(30) Priority: 25.11.2021 KR 20210164221
(71) Applicant: Inno-It Co., Ltd., Busan 48058 (KR)
(72) Inventor: KWON, Su-il, Anyang-si Gyeonggi-do 14102 (KR)
(74) Representative: Müller Hoffmann & Partner
(86) International application number: PCT/KR2022/018907
(87) International publication number: WO 2023/096430

(57) **Abstract**

The present disclosure relates to a vaporization unit of a microparticle generator, and more particularly, to a vaporization unit of a microparticle generator in which a material having a small difference in heat transfer rate from a heating coil holds liquid, thereby preventing carbonization. A porous ceramic heater includes a porous ceramic prepared by mixing a silicate, a binder, and a pore-forming agent to form a slurry and then performing molding, drying, and sintering thereon and a resistance heating element coupled to the porous ceramic, generating heat when current is applied to heat the porous ceramic, wherein liquid supported on the porous ceramic is vaporized by heat of the resistance heating element.

## Description

### TECHNICAL FIELD

The present disclosure relates to a vaporization unit of a microparticle generator, and more particularly, to a vaporization unit of a microparticle generator in which a material having a small difference in heat transfer rate from a heating coil holds liquid, thereby preventing carbonization.

### BACKGROUND ART

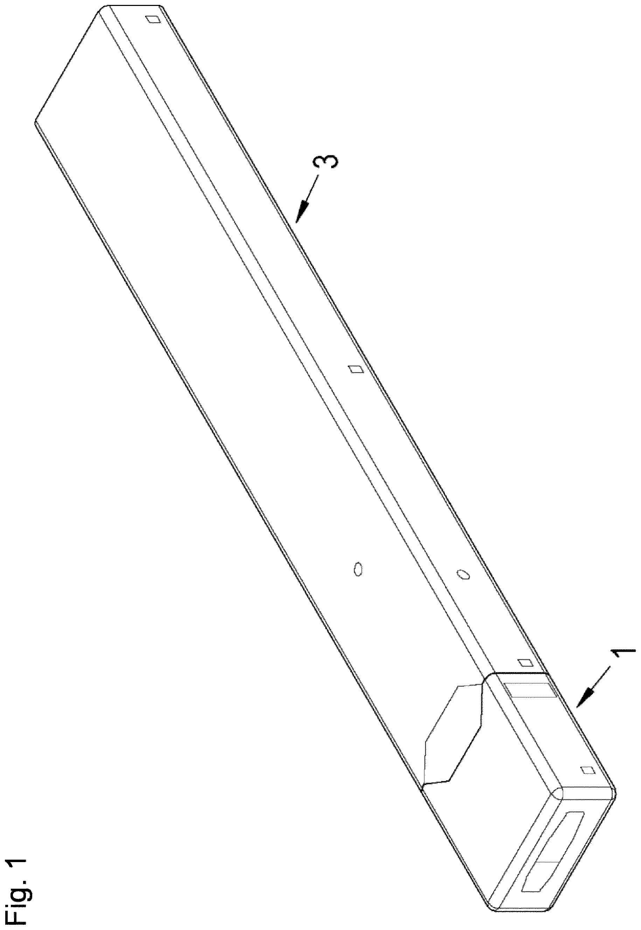

FIG. 1 is a perspective view of a microparticle generator using a liquid cartridge according to the related art.

The microparticle generator according to the related art includes an upper portion of a body 3 equipped with a battery (not shown), a control circuit (not shown), and the like, a liquid storage tank storing liquid, and a cartridge 1 equipped with an atomizer receiving the liquid from the liquid storage tank and atomizing the received liquid. The cartridge 1 is detachably attached to the upper portion of the body 3 and generates microparticles by heating the liquid upon receiving power from the body 3.

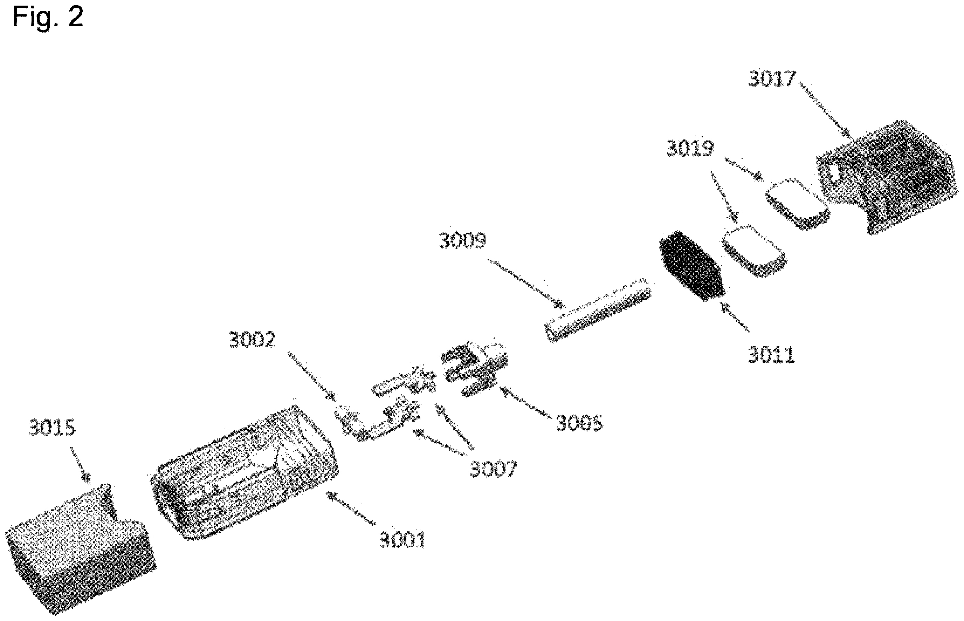

FIG. 2 is an exploded view of a liquid cartridge according to the related art.

The cartridge includes a liquid storage housing 3001 storing liquid, an elastomer cap 3011 installed in the liquid storage housing 3001 and partitioning the liquid storage space and an atomization space, a wick/coil assembly 3002 installed at one end portion of the liquid storage housing 3001 installed in a lower portion of the elastomer cap 3011, a wick housing 3005 fixing the wick/coil assembly 3002, a cannula 3009 passing through the elastomer cap 3011 and the liquid storage space, a mouthpiece 3017 separated from a tank for intaking microparticles passing through the cannula 3009 and one or more absorbent pads 3019 installed in the mouthpiece 3017 to absorb droplets.

A pair of contact terminals 3007 are connected to a coil of the wick/coil assembly 3002 and receive power from the body. The contact terminals 3007 pass through the liquid storage housing 3001, and a portion of the contact terminals 3007 is exposed to the outside of the housing 3001 and the remaining portion thereof is located within the housing 3001.

In addition, in order to protect the contact terminal 3007 exposed to the outside of the housing 3001 before the cartridge is coupled to the body and to prevent liquid from leaking, a cover 3015 may be coupled to a lower portion of the housing 3001.

When the wick/coil assembly 3002 is installed below the elastomer cap 3011, air flows in through pores formed in a lower portion of the housing 3001 and is intaken through the cannula 3009 together with microparticles formed by atomizing the liquid by the wick/coil assembly 3002.

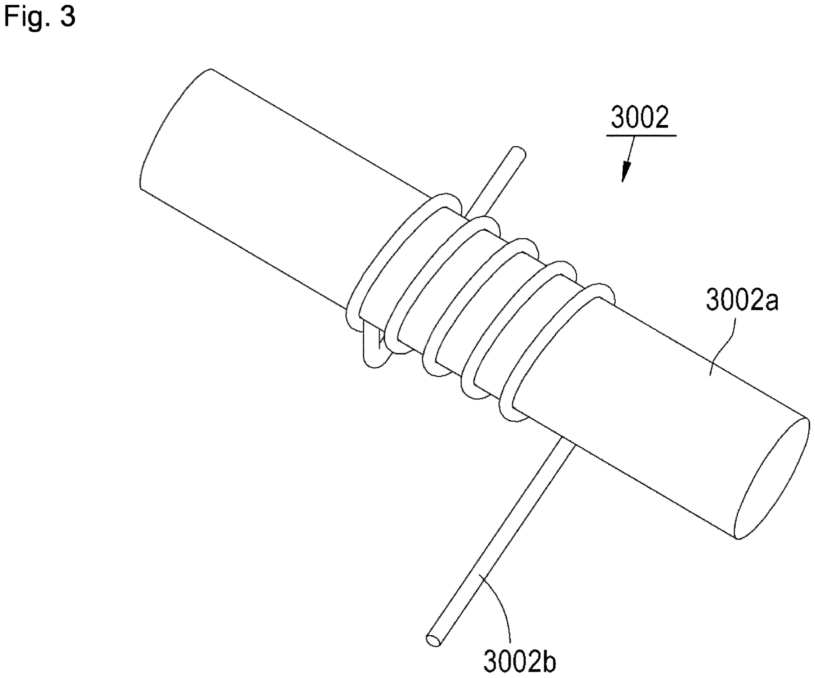

FIG. 3 is a view illustrating a wick/coil assembly provided in a liquid cartridge according to the related art. The coil/wick assembly 3002 has a structure in which a coil 3002b is wound around the outside of a wick 3002a formed of silica wick, sponge foam material, fiber material, etc. When power is applied to the coil/wick assembly 3002, the coil 3002b is heated to vaporize liquid contained in the wick 3002a. Here, due to a difference in heat transfer rate between the wick 3002a and the coil 3002b, the liquid and the wick 3002a may be locally carbonized. Carbonization of the liquid and the wick 3002a may cause a user to feel uncomfortable when inhaling and reduce satisfaction. Therefore, it is required to develop a structure capable of preventing carbonization of a heating portion.

### DISCLOSURE OF THE INVENTION

An aspect of the present disclosure is to provide a ceramic heater of a microparticle generator in which a contact pad, instead of a lead wire, is formed so that the contact pad comes into direct contact with a terminal during assembly to operate, thereby eliminating unnecessary processes and preventing the occurrence of harmful substances, and a liquid cartridge including the same.

According to an embodiment of the present disclosure, there is provided a porous ceramic heater including: a porous ceramic prepared by mixing a silicate, a binder, and a pore-forming agent to form a slurry and then performing molding, drying, and sintering thereon; and a resistance heating element coupled to the porous ceramic, generating heat when current is applied to heat the porous ceramic, wherein liquid supported on the porous ceramic is vaporized by heat of the resistance heating element.

According to another embodiment, SiO₂ may be added to the porous ceramic to improve strength.

According to another embodiment, the silicate constituting the porous ceramic may be magnesium silicate or aluminum silicate.

According to another embodiment, the silicate constituting porous ceramics may be spherical particles.

According to another embodiment, among the silicate particles, only particles having a size within ±30 % of an average silicate particle size may be used.

According to another embodiment, a size of the silicate particles may be about 75 to about 95 µm.

According to another embodiment, a pore size of the porous ceramic may be about 25 to about 40 µm.

According to another embodiment, porosity of the porous ceramic may be about 45 % to about 65 %.

According to another embodiment, mechanical strength of the porous ceramic may be 5 kgf or more.

According to another embodiment, a sintering temperature of the porous ceramic may be about 700 °C to about 800 °C.

According to another embodiment, resistance of the resistance heating element may be about 0.7 Ω to about 1.5 Ω.

According to another embodiment, a maximum heating temperature of the resistance heating element may be limited to 300 °C.

According to another embodiment, the resistance heating element may be formed of stainless use steel (SUS) so that a heating temperature is monitored.

According to another embodiment, a temperature coefficient of resistivity (TCR) range of SUS to manufacture the resistance heating element may be about 2,000 ppm/°C to about 3,000 ppm/°C.

According to another embodiment, the porous ceramic heater may further include: a pair of terminal pads connected to or brought into contact with an external power source and electrically connected to the resistance heating element to supply power to the resistance heating element.

According to another embodiment, the pair of terminal pads may be connected to both ends of the resistance heating element, and the resistance heating element may be bent at least twice or more to be parallel to an adjacent portion between the pair of terminal pads.

According to another embodiment, the adjacent portion of the resistance heating element in parallel may be disposed at a distance of about 0.2 to about 1.0 mm from each other.

According to another embodiment, a total area of the resistance heating element and the pair of terminal pads may be at least 30% of an area of a surface of the porous ceramic closest to the resistance heating element.

According to another embodiment, the pair of terminal pads may be formed of a metal having low electrical resistance, including SUS, lead-free brass, gold, silver, copper, alloys, tungsten, nickel, aluminum, chromium, and iron.

According to another embodiment, the pair of terminal pads may be formed of the same material as a material of the resistance heating element.

According to another embodiment, the pair of terminal pads may be formed of a material different from a material of the resistance heating element.

According to another embodiment, the resistance heating element may be formed of a material having thermal conductivity higher than thermal conductivity of the pair of terminal pads.

According to another embodiment, a width of the resistance heating element may be less than 50% of a width of each of the pair of terminal pads.

According to another embodiment, the pair of terminal pads may be plated with gold, nickel, tin, silver, platinum, palladium, or zinc.

According to another embodiment, the resistance heating element and the pair of terminal pads may be inserted into the porous ceramic.

According to another embodiment, the porous ceramic may have a through-hole perpendicular to an installation surface of the resistance heating element.

According to another embodiment, the resistance heating element may have a width of 0.05 mm or more.

According to another embodiment, a minimum thickness of the porous ceramic may be 0.5 mm or more.

According to another embodiment, the porous ceramic heater may further include: a heat-resistant elastic cover covering an outer surface of the porous ceramic to prevent liquid leakage.

According to another embodiment, the heat-resistant elastic cover may be located on a side opposite to an installation surface of the terminal pad.

According to another embodiment, the porous ceramic may have a shape of hexahedron, cylinder, and bath.

According to another embodiment of the present disclosure, there is provided a liquid cartridge including: a case storing liquid and including a flow path capable of intaking microparticles generated as the liquid is vaporized; the ceramic heater described above; and a terminal installed in the case and having one end in contact with a terminal pad of the ceramic heater and the other end in contact with an external power source, wherein the liquid supported by the porous ceramic is vaporized by heating of a hot wire.

According to another embodiment, the terminal pad may be formed by bending a metal plate.

According to another embodiment, one end of the terminal pad may be connected to the resistance heating element, and the other end of the terminal pad may be in contact with the terminal pad of the porous ceramic heater.

According to another embodiment, the terminal may have a contact protrusion formed on a surface in contact with the terminal pad.

According to another embodiment, the terminal may be worked to have a column shape or dumbbell shape.

According to another embodiment, the case may include a main case having a liquid storage space and a flow path and a lower case coupled to an inner lower portion of the main case, and the terminal may be insert-injected during injection molding of the lower case.

According to another embodiment, the lower case may include an air flow inlet for introducing external air into the porous ceramic side.

According to another embodiment, the airflow inlet may be perpendicular to a heating surface of the ceramic heater.

The vaporization unit of the microparticle generator according to the present disclosure has the advantage of preventing carbonization of liquid or liquid moisture absorbent by vaporizing liquid contained in a material having a small difference in heat transfer rate from a heated coil by heating the coil.

The vaporization unit of the microparticle generator according to the present disclosure may absorb liquid with a porous ceramic and heats the liquid absorbed by the porous ceramic, thereby facilitating working, compared to a wick formed of cotton or silica wick, to increase dimensional precision.

In addition, the vaporization unit of the microparticle generator according to the present disclosure may cause less working variations, thereby improving deviations of the amount of atomization or leakage, and may quickly atomize liquid due to high thermal conductivity thereof.

### BRIEF DESCRIPTION OF THE DRAWINGS

FIG. 1 is a perspective view of a microparticle generator using a liquid cartridge according to the related art;
FIG. 2 is an exploded view of a liquid cartridge according to the related art;
FIG. 3 is a view illustrating a wick/coil assembly provided in a liquid cartridge according to the related art;
FIG. 4 is an exploded view of a liquid cartridge including a ceramic heater according to a first embodiment of the present disclosure;
FIG. 5 is a cross-sectional view of a liquid cartridge including a ceramic heater according to the first embodiment of the present disclosure;
FIG. 6 is a view illustrating a ceramic heater included in a liquid cartridge according to the first embodiment of the present disclosure;
FIG. 7 is a view illustrating a relationship between a size of silicate particles and pores constituting a porous ceramic;
FIG. 8 is a view illustrating an operation of a liquid cartridge including a ceramic heater and movement of air flow according to an embodiment of the present disclosure; and
FIG. 9 is a view illustrating a ceramic heater included in a liquid cartridge according to a second embodiment of the present disclosure.

### BEST MODE FOR CARRYING OUT THE INVENTION

Hereinafter, the present disclosure will be described in more detail with reference to the drawings.

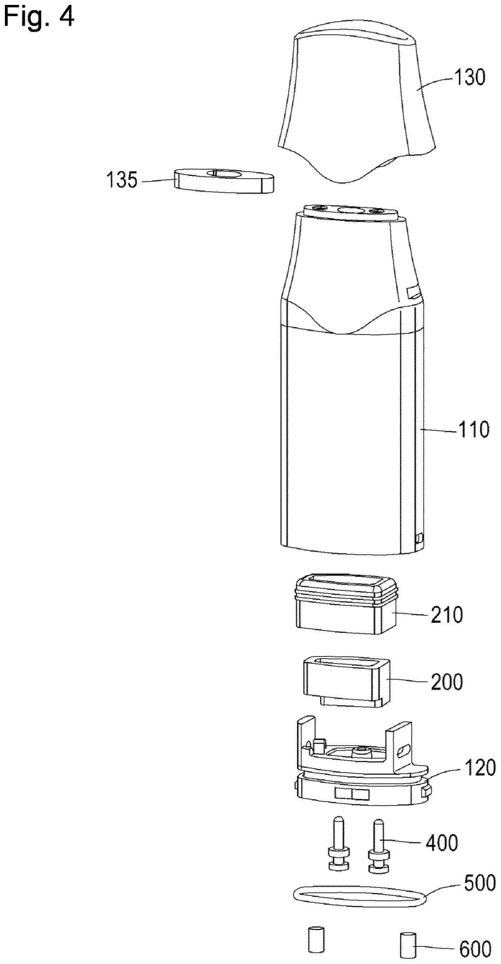

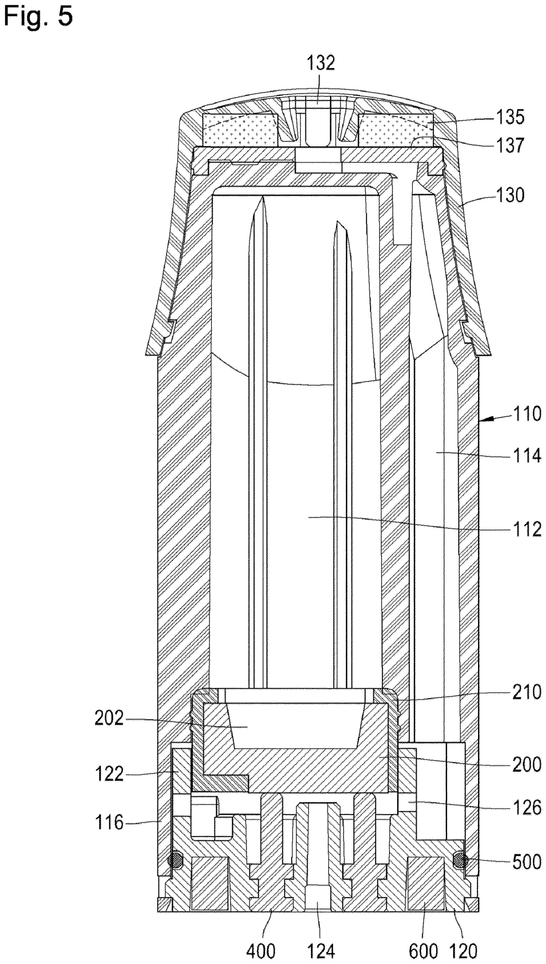

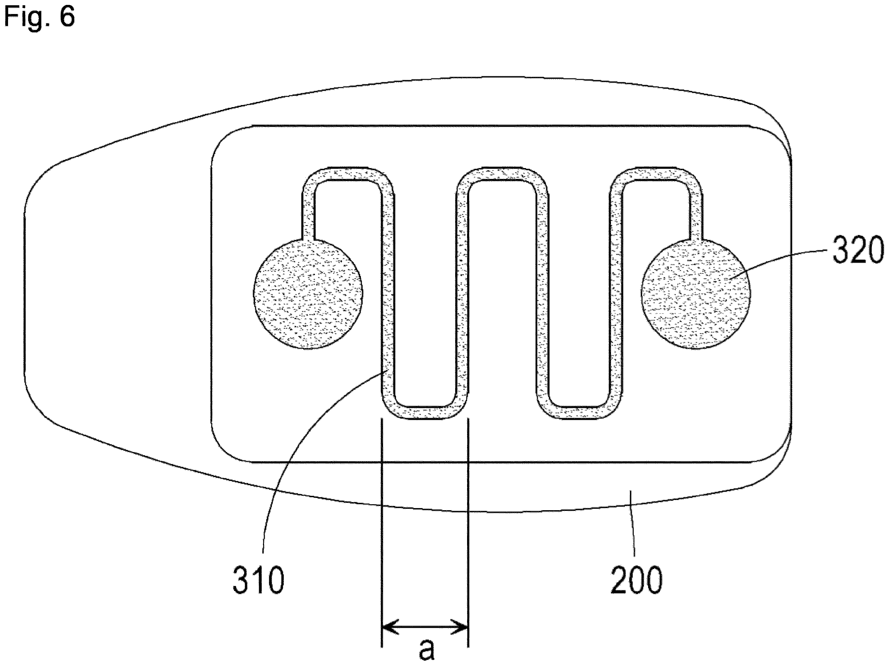

FIG. 4 is an exploded view of a liquid cartridge including a ceramic heater according to a first embodiment of the present disclosure, FIG. 5 is a cross-sectional view of a liquid cartridge including a ceramic heater according to the first embodiment of the present disclosure, and FIG. 6 is a view illustrating a ceramic heater included in a liquid cartridge according to the first embodiment.

A liquid cartridge including a ceramic heater according to an embodiment of the present disclosure stores liquid and includes cases 110, 120, and 130 having a flow path 114 along which microparticles generated as liquid is vaporized is intaken.

The cases 110, 120, and 130 include a main case 110 including a liquid storage space 112 and the flow path 114, a lower case 120 coupled to an inner lower portion of the main case 110, and an upper case 130 coupled to an outer upper portion of 110 of the main case 110.

In the main case 110, a liquid storage space 112 and the flow path 114 are arranged side by side, and a wall body 116 to which the lower case 120 is coupled is provided therebelow. The lower case 120 is inserted into the wall body 116 and coupled thereto. The lower case 120 has a wall body 122 forming a space in which a ceramic heater, which will be described later, is accommodated in an upper portion thereof, and microparticles are generated by the ceramic heater in the wall body 122. A through-hole 126 is formed in the wall body 122, and the through-hole 126 connects the flow path 114 of the main case 110 and the space inside the wall body 122.

In this case, an O-ring 500 formed of an elastic material may be installed on an outer circumference of the lower case 120 to prevent leakage of liquid. The O-ring 500 maintains airtightness between the lower case 120 and the main case 110.

Meanwhile, a magnet 600 may be installed in a lower portion of the lower case 120. Attraction acts between the microparticle generator (not shown), a counterpart to which the liquid cartridge is coupled, and the installed magnet 600 or an iron plate, helping to maintain the coupling of the liquid cartridge.

The ceramic heater includes a porous ceramic 200 fixed to the main case 110 and the lower case 120, a resistance heating element 310 coupled to the porous ceramic 200, and a terminal pad 320. The porous ceramic 200 is coupled to a lower side of the liquid storage space 112 of the main case 110, and a concave portion 202 for storing liquid is formed in an upper portion thereof. Here, in order to prevent liquid leakage from occurring at a joint between the porous ceramic 200, the main case 110, and the lower case 120, a heat-resistant elastic cover 210 covering an outer circumference of the porous ceramic 200 may be further provided. The upper case 130 is coupled to an upper portion of the main case 110 and includes an intake hole 132 allowing inhalation of microparticles transferred through the flow path 114 of the main case 110. Here, a moisture absorbent 135 or a sealing film 137 may be provided between the upper case 130 and the main case 110 to prevent inhalation of liquid droplets that may be generated as liquid is cooled through the flow path 114.

The porous ceramic 200 may be prepared by preparing a slurry by mixing a silicate, a binder, and a pore-forming agent, molding, drying, and then sintering. In order to improve strength of the porous ceramic 200, SiO₂ may be further added. In this case, the silicate is preferably magnesium silicate or aluminum silicate. Here, it is preferable that silicate particles have a spherical shape and have an even particle size distribution. For example, it is preferable to limit a particle size to particles having a size within ±30% of an average particle size or to manufacture the porous ceramic 200 only with particles having a particle size in the range of 75 to 95 µm.

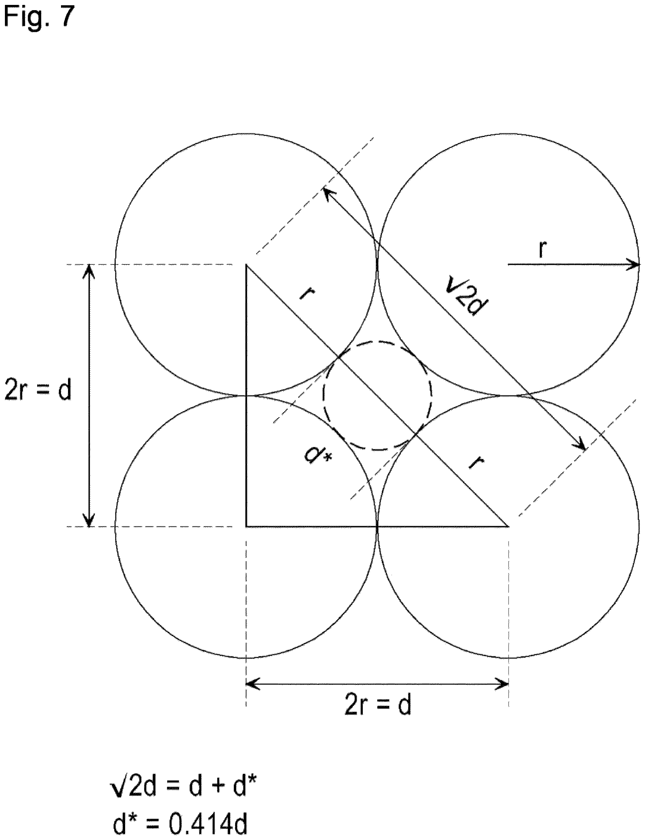

FIG. 7 is a diagram illustrating a relationship between silicate particles and pores constituting a porous ceramic. As shown in FIG. 7, spherical particles having a diameter of d may be packed to form pores having a diameter of 0.414d. In addition, although not shown in the drawing, spherical particles having the diameter of d may be packed by a tetrahedral site, which is another packing method, to form pores having a diameter of about 0.25 d. That is, when the diameters of the silicate particles are evenly distributed, a pore size between the silicate particles may also be estimated and porosity or a pore size may be sufficiently controlled. Therefore, it is preferable that the sizes of the silicate particles for manufacturing the porous ceramic 200 are even. Meanwhile, the pore size of the porous ceramic 200 is preferably within 25 to 40 µm, and the porosity is preferably 45 to 65%.

The manufactured porous ceramic 200 may have a thick portion and a thin portion, such as an outer circumferential portion of the concave portion 202. In order to prevent breakage, a thickness of the portion having a minimum thickness of the porous ceramic 200 is preferably 0.5 mm or more. In addition, the porous ceramic 200 preferably has a fracture strength of 5 kgf or more.

The resistance heating element 310, which is embedded in the porous ceramic 200 or located near the surface of the porous ceramic 200 and at least partially exposed, is coupled to the porous ceramic 200. A pair of terminal pads 320 contacting terminals to be described below are formed at both ends of the resistance heating element 310. The resistance heating element 310 and the terminal pad 320 may be inserted and integrally coupled during molding before sintering the porous ceramic 200, or may be coupled through a separate process after manufacturing the porous ceramic 200. When the resistance heating element 310 and the terminal pad 320 are inserted during molding of the porous ceramic 200 and then sintered, a sintering temperature may be 700 °C to 800 °C to prevent oxidation of the resistance heating element 310 and the terminal pad 320.

Here, the resistance heating element 310 may be bent at least twice or more to be formed to be parallel (an S shape or a zigzag shape) to an adjacent portion in order to increase a length of the resistance heating element 310 coupled to the porous ceramic 200 to the maximum to increase a heating value. Here, it is preferable that an interval (a) between the adjacent curved portions of the resistance heating element 310 may be 0.2 to 1.0 mm. Meanwhile, there is no particular restriction on the shape of the terminal pad 320, and the terminal pad 320 may have various shapes, such as a circle, a rectangle, or a polygon. Here, the area of the resistance heating element 310 and the terminal pad 320 is preferably 30% or more of the area of a surface, among outer surfaces of the porous ceramic 200, closest to the resistance heating element 310. The porous ceramic 200 shown in FIGS. 4 to 6 is approximately hexahedral and has a bath shape having a concave portion 202 formed on an upper surface thereof. In addition, the resistance heating element 310 and the terminal pad 320 are disposed on a lower surface of the porous ceramic 200. Therefore, in the liquid cartridge according to an embodiment of the present disclosure shown in FIGS. 4 to 6, the sum of the areas of the resistance heating element 310 and the terminal pad 320 has to be 30% or more of the area of the lower surface of the porous ceramic 200.

Here, the porous ceramic 200 may have a cylindrical shape, a hexahedral shape without a concave portion, or a shape having an irregular outer surface as necessary, but an outer surface closest to the resistance heating element 310, among outer surfaces of the porous ceramic 200, may be determined, and here, the area of the resistance heating element 310 and the terminal pad 320 has to be 30% or more of the area of the outer surface closest to the resistance heating element 310.

Here, although the terminal pad 320 and the resistance heating element 310 may be formed of the same material, it is preferable that the terminal pad 320 is not heated and only the resistance heating element 310 is heated, so that the resistance heating element 310 may be formed of a material having higher thermal conductivity than that of the terminal pad 320. In addition, it is preferable that the width of the resistance heating element 310 is 50% or less of the width of the terminal pad 320. However, it is preferable that the width of the resistance heating element 310 exceeds 0.05 mm in order to secure a sufficient amount of heating value. Here, resistance of the resistance heating element 310 is preferably in the range of 0.7 to 1.5 Ω.

The resistance heating element 310 is preferably formed of stainless use steel (SUS) so that a heating temperature may be monitored, and a temperature coefficient of resistivity (TCR) range is preferably 2,000 to 3,000 ppm/°C. The terminal pad 320 may be formed of a metal having low electrical resistance, such as SUS, lead-free brass, gold, silver, copper, an alloy, tungsten, nickel, aluminum, chromium, or iron, and the terminal pad 320 may be plated with gold or nickel, tin, silver, platinum, palladium, or zinc.

Meanwhile, a sensor pattern (not shown) for measuring temperature may be formed and coupled to the porous ceramic 200. The sensor pattern may be attached near the resistance heating element 310 to detect a heating temperature of the resistance heating element 310. As described above, since the porous ceramic 200 is formed of a material having high thermal conductivity, the sensor pattern may be attached to a surface of the porous ceramic 200, rather than the vicinity of the resistance heating element 300, to measure a heating temperature of the porous ceramic 200.

The sensor pattern may be formed of any one of a negative temperature coefficient (NTC) thermistor material including at least one of Mn, Co, Ni, and Fe, a positive temperature coefficient (PTC) thermistor material including at least one of BaTis, Y, Ce, La, and Sn, and a circuit structure for reading a change in resistance based on platinum (Pt) and a temperature, or combinations thereof.

Meanwhile, a terminal 400 in contact with the terminal pad 320 is provided so that external power may be transferred to the resistance heating element 310 through the terminal pad 320. The terminal 400 may be insert-injected to be integrally manufactured during injection molding of the lower case 120 manufactured as injection moldings. The terminal 400 has a dumbbell shape in which a portion coupled to the lower case 120 is formed with a flange portion extending from a cylinder to an outer circumference so as not to be easily separated from the lower case 120. A pillar protruding upwardly from an upper flange portion is further provided, and the pillar protruding upwardly contacts the terminal pad 320. In addition, a lower flange portion comes into contact with an external power source, that is, a terminal of the microparticle generator to which the liquid cartridge is coupled.

However, there is no particular restriction on the shape of the terminal 400, and the terminal 400 may have any shape as long as the terminal 400 may electrically connect the terminal pad 320 to a terminal of the microparticle generator, while maintaining a state of being coupled to the lower case 120. For example, the terminal 400 may be a bent plate material, and at least a portion thereof may be insert-injected into the lower case 120.

The terminal 400 may be formed of one or more materials selected from metals having low electrical resistance, such as SUS, lead-free brass, gold, silver, copper, alloys, tungsten, nickel, aluminum, chromium, and iron. Here, the terminal 400 may be plated with one or more materials selected from among gold, nickel, tin, silver, platinum, palladium, and zinc.

When electricity is supplied through the terminal 400 and the resistance heating element 310 generates heat, liquid supported on the porous ceramic 200 is vaporized and microparticles are generated.

Here, the lower case 120 includes an air flow inlet 124 through which external air may be introduced for smooth inhalation by the user. The air flow inlet 124 is formed to be perpendicular to a surface having the highest temperature, among outer surfaces of the porous ceramic 200. As described above, in an embodiment of the present disclosure, the lower surface of the porous ceramic 200 is a surface closest to the resistance heating element 310, and thus, the lower surface of the porous ceramic 200 has the highest temperature, among the outer surfaces. Therefore, the air flow inlet 124 formed in the lower case 120 is disposed to be perpendicular to the heating surface of the porous ceramic 200. Here, the heating surface is defined as a surface closest to the resistance heating element 310, among the surfaces of the porous ceramic 200.

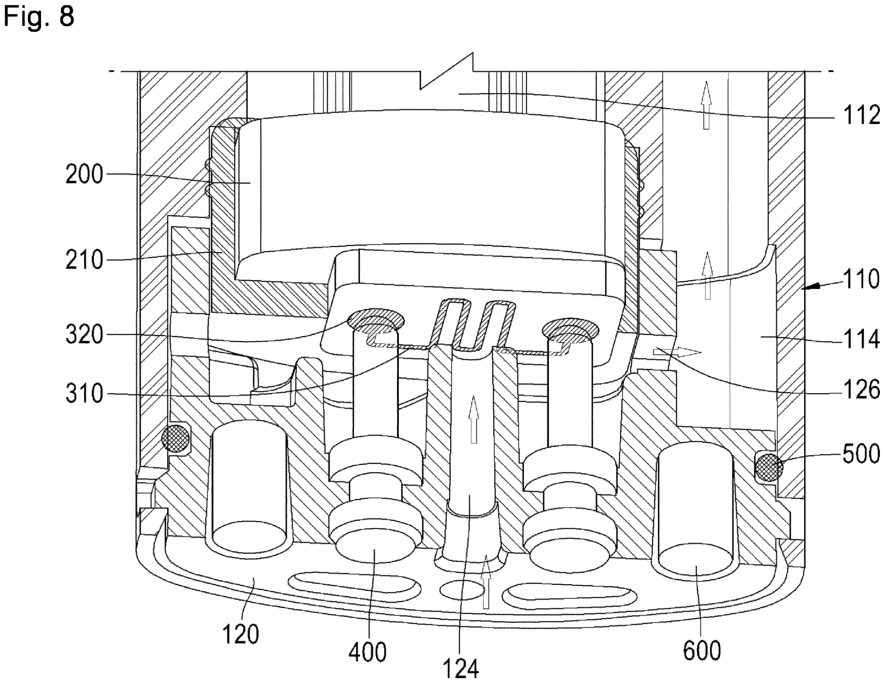

FIG. 8 is a view illustrating an operation of a liquid cartridge equipped with a ceramic heater and movement of air flow according to an embodiment of the present disclosure.

As described above, the porous ceramic 200 in which the resistance heating element 310 and the terminal pad 320 are formed is covered with a heat-resistant elastic cover 210 and installed in the main case 110 and the lower case 120. An empty space is formed below the lower surface of the porous ceramic 200 in the lower case 120. When power is applied to the terminal pad 320 formed in the porous ceramic 200 through the terminal 400 installed on the lower side of the lower case 120, the resistance heating element 310 is heated to vaporize the liquid supported in the porous ceramic 200, vaporized microparticles stay in the empty space below the lower surface of the ceramic 200. Thereafter, when the user forms a negative pressure through the intake hole 132 of the upper case 130 (refer to FIG. 4), external air may be introduced through the air flow inlet 124 of the lower case 120 and move to the flow path 114 of the main case 110 through the through-hole 126 of the wall body 122 of the lower case 120 together with the vaporized microparticles, and the user may inhale through the intake hole 132.

In addition, in the porous ceramic 200, the movement of the liquid phase is slow, the movement of the microparticles is smooth at high temperatures, and the pores of the porous ceramic 200 are connected to form a passage through which an aerosol may pass. Here, the size of the pores may be about 25 to about 40 µm, and the porosity may be 45 % to 65%.

The porous ceramic 200 may be manufactured by a powder injection molding method. After mixing a silicate, a binder, and a pore-forming agent to prepare a slurry, the mixture is injected into a mold to be manufactured in a desired shape. Thereafter, the binder may be removed and sintering may be performed to manufacture the porous ceramic 200 having a desired shape.

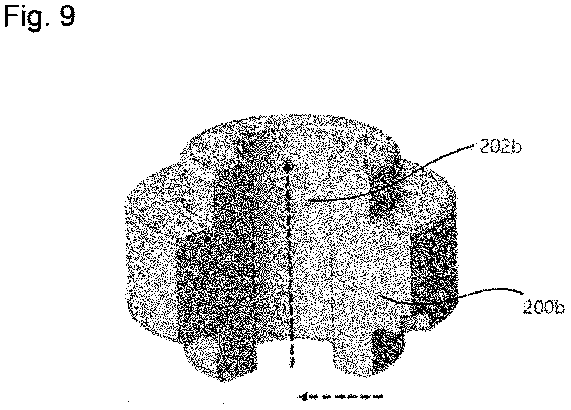

As described above, the porous ceramic 200 according to the first embodiment of the present disclosure has the concave portion 202 storing liquid, but the porous ceramic 200b may also be manufactured in the form of a tube having a through-hole 202a, instead of the concave portion 202, as shown in FIG. 9. In addition, a porous ceramic having a plate shape or a predetermined shape without a recess or a hole may also be manufactured.

In the porous ceramic heater according to the present disclosure, when current is applied to the resistance heating element through the terminal pad, the resistance heating element generates heat and the heat is transferred to the porous ceramic. Here, unlike the wick of the related art, the porous ceramic is formed of a material having high thermal conductivity, so that a temperature difference between the resistance heating element that directly generates heat and the porous ceramic heated by the resistance heating element is small, and the porous ceramic may be heated evenly. Therefore, the possibility of carbonization of liquid supported on the porous ceramic or the porous ceramic may be reduced.

Meanwhile, by adjusting the porosity of the porous ceramic, the stored amount of the supported liquid may be adjusted, and accordingly, the amount of atomization during puffing may be adjusted.

## Claims

1. A porous ceramic heater comprising:
a porous ceramic prepared by mixing a silicate, a binder, and a pore-forming agent to form a slurry and then performing molding, drying, and sintering thereon; and
a resistance heating element coupled to the porous ceramic, generating heat when current is applied to heat the porous ceramic,
wherein liquid supported on the porous ceramic is vaporized by heat of the resistance heating element.

2. The porous ceramic heater of claim 1, wherein SiO₂ is added to the porous ceramic to improve strength.

3. The porous ceramic heater of claim 1, wherein the silicate constituting the porous ceramic is magnesium silicate or aluminum silicate.

4. The porous ceramic heater of claim 1, wherein the silicate constituting porous ceramics is spherical particles.

5. The porous ceramic heater of claim 1 or 4, wherein, among the silicate particles, only particles having a size within ±30 % of an average silicate particle size are used.

6. The porous ceramic heater of claim 1 or 4, wherein a size of the silicate particles is about 75 to about 95 µm.

7. The porous ceramic heater of claim 1, wherein a pore size of the porous ceramic is about 25 to about 40 µm.

8. The porous ceramic heater of claim 1, wherein porosity of the porous ceramic is about 45 % to about 65 %.

9. The porous ceramic heater of claim 1, wherein mechanical strength of the porous ceramic is 5 kgf or more.

10. The porous ceramic heater of claim 1, wherein a sintering temperature of the porous ceramic is about 700 °C to about 800 °C.

11. The porous ceramic heater of claim 1, wherein resistance of the resistance heating element is about 0.7 Ω to about 1.5 Ω.

12. The porous ceramic heater of claim 1, wherein a maximum heating temperature of the resistance heating element is limited to 300 °C.

13. The porous ceramic heater of claim 1, wherein the resistance heating element is formed of stainless use steel (SUS) so that a heating temperature is monitored.

14. The porous ceramic heater of claim 13, wherein a temperature coefficient of resistivity (TCR) range of SUS to manufacture the resistance heating element is about 2,000 ppm/°C to about 3,000 ppm/°C.

15. The porous ceramic heater of claim 1, further comprising:
a pair of terminal pads connected to or brought into contact with an external power source and electrically connected to the resistance heating element to supply power to the resistance heating element.

16. The porous ceramic heater of claim 15, wherein the pair of terminal pads are connected to both ends of the resistance heating element, and the resistance heating element is bent at least twice or more to be parallel to an adjacent portion between the pair of terminal pads.

17. The porous ceramic heater of claim 16, wherein the adjacent portion of the resistance heating element in parallel are disposed at a distance of about 0.2 to about 1.0 mm from each other.

18. The porous ceramic heater of claim 15, wherein a total area of the resistance heating element and the pair of terminal pads is at least 30% of an area of a surface of the porous ceramic closest to the resistance heating element.

19. The porous ceramic heater of claim 15, wherein the pair of terminal pads are formed of a metal having low electrical resistance, including SUS, lead-free brass, gold, silver, copper, alloys, tungsten, nickel, aluminum, chromium, and iron.

20. The porous ceramic heater of claim 15, wherein the pair of terminal pads is formed of the same material as a material of the resistance heating element.

21. The porous ceramic heater of claim 15, wherein the pair of terminal pads is formed of a material different from a material of the resistance heating element.

22. The porous ceramic heater of claim 21, wherein the resistance heating element is formed of a material having thermal conductivity higher than thermal conductivity of the pair of terminal pads.

23. The porous ceramic heater of claim 15, wherein a width of the resistance heating element is less than 50% of a width of each of the pair of terminal pads.

24. The porous ceramic heater of claim 15, wherein the pair of terminal pads are plated with gold, nickel, tin, silver, platinum, palladium, or zinc.

25. The porous ceramic heater of claim 15, wherein the resistance heating element and the pair of terminal pads are inserted into the porous ceramic.

26. The porous ceramic heater of claim 1, wherein the porous ceramic has a through-hole perpendicular to an installation surface of the resistance heating element.

27. The porous ceramic heater of claim 1, wherein the resistance heating element has a width of 0.05 mm or more.

28. The porous ceramic heater of claim 1, wherein a minimum thickness of the porous ceramic is 0.5 mm or more.

29. The porous ceramic heater of claim 1, further comprising:
a heat-resistant elastic cover covering an outer surface of the porous ceramic to prevent liquid leakage.

30. The porous ceramic heater of claim 29, wherein the heat-resistant elastic cover is located on a side opposite to an installation surface of the terminal pad.

31. The porous ceramic heater of claim 1, wherein the porous ceramic has a shape of hexahedron, cylinder, and bath.

32. A liquid cartridge comprising:
a case storing liquid and including a flow path capable of intaking microparticles generated as the liquid is vaporized;
the ceramic heater of claims 15 to 13; and
a terminal installed in the case and having one end in contact with a terminal pad of the ceramic heater and the other end in contact with an external power source,
wherein the liquid supported by the porous ceramic is vaporized by heating of a hot wire.

33. The liquid cartridge of claim 32, wherein the terminal pad is formed by bending a metal plate.

34. The liquid cartridge of claim 33, wherein one end of the terminal pad is connected to the resistance heating element, and the other end of the terminal pad is in contact with the terminal pad of the porous ceramic heater.

35. The liquid cartridge of claim 34, wherein the terminal has a contact protrusion formed on a surface in contact with the terminal pad.

36. The liquid cartridge of claim 33, wherein the terminal is worked to have a column shape or dumbbell shape.

37. The liquid cartridge of claim 32, wherein
the case includes a main case having a liquid storage space and a flow path and a lower case coupled to an inner lower portion of the main case, and
the terminal is insert-injected during injection molding of the lower case.

38. The liquid cartridge of claim 37, wherein the lower case includes an air flow inlet for introducing external air into the porous ceramic side.

39. The liquid cartridge of claim 38, wherein the air flow inlet is perpendicular to a heating surface of the ceramic heater.
